# EUROPEAN PATENT SPECIFICATION

(11) **EP 4 129 567 B1**
(45) Date of publication and mention of the grant of the patent: **04.03.2026**
(21) Application number: 22187144.5
(22) Date of filing: 27.07.2022
(51) Int. Cl.: B23Q 11/00, B23D 59/00

(54) **MACHINE FOR MACHINING WORKPIECES, WITH A BLOWING DEVICE**
MASCHINE ZUR BEARBEITUNG VON WERKSTÜCKEN, MIT EINER GEBLÄSEVORRICHTUNG
MACHINE POUR L'USINAGE DE PIECES, AVEC UN DISPOSITIF DE SOUFFLAGE

(30) Priority: 06.08.2021 IT 202100021473
(43) Date of publication of application: 08.02.2023
(73) Proprietor: SCM Group S.p.A., 47921 Rimini (RN) (IT)
(72) Inventor: SOTTORIVA, Matteo, 47921 RIMINI (IT)
(74) Representative: Tiburzi, Andrea

(56) References cited:
- DE-A1- 102007 023 664
- DE-A1- 102016 209 107
- DE-A1- 3 800 050
- DE-U- 7 138 005

## Description

The present invention relates to a machine for machining workpieces made of in wood, ceramic, plastic, metal, glass, fiberglass, and the like.

More specifically, the invention relates to a machine of the above type, designed and manufactured in particular to make grooves on wooden workpieces.

In the following the description will be directed to a pass-through type machine for making grooves on wooden panels, but it is clear that it should not be considered limited to this specific use.

This machining can be carried out in an edge-banding machine, in a moulder machine, or in other types of pass-through machines.

### Technical field

As is well known, there are currently machine tools of the above type, in which a panel or other piece to be machined is machined while it flows inside the machine itself in an advancement direction along a determined axis.

In particular, there are machines comprising a rotary tool, such as for example a blade or a milling cutter, which makes a groove on the workpiece parallel to the advancement direction, and a suction hood, to suck up the chip or dust resulting from the machining.

Rotary tools can make grooves in favor of advancement, that is, rotating in a way that is integral to the advancement of the piece, or against advancement, that is, rotating in the opposite direction to the advancement of the piece.

It is well known how the creation of grooves involves the generation of a fast jet of chips or dust, due to the rotation high speed of the tool. This chip jet is directed in the direction of the peripheral speed of the tool itself, tangential to it.

In particular, when a rotary tool makes grooves on a workpiece in favor of the advancement, the chip jet is directed downstream of the tool with respect to the advancement direction.

An obvious disadvantage of said solution is given by the fact that the chip jet may not be sucked by the suction hood, instead coming out of the machine itself, also compromising the correct operation of any other machines located downstream of the machine with respect to the advancement direction.
*The relevant prior art also comprises the patent documents* DE 10 2016 209107, on which the preamble of enclosed claim 1 is based, and DE 71 38 005*,* DE 38 00 050*, and* DE 10 2007 023664*.*

### Scope of the invention

In light of the above, it is, therefore, an object of the present invention providing a machine for working workpieces made of wood, ceramic, plastic, metal, glass, fiberglass, and the like, which allows containing and sucking the resulting chip from optimal working.

### Object of the invention

It is therefore object of the present invention a machine as defined in enclosed claim 1.

According to a preferred embodiment, said machine may comprise advancing means, to allow the advancement of said workpieces to be machined along an advancement direction, parallel to an advancement axis, and said advancement direction may be concordant with said expulsion direction.

Still according to a preferred embodiment, said tool may be a blade.

Advantageously according to a preferred embodiment, said tool may be capable of rotating with said advancement direction of said workpiece around an axis parallel to a horizontal axis, perpendicular to said perpendicular plane, and it is capable of translating along an axis parallel to said axis and along an axis parallel to said horizontal axis.

Further according to the invention, said blowing device comprises at least one nozzle from which said air flow comes out, and moving means, capable of moving said nozzle in such a way to intercept said jet of chips.

According to a preferred embodiment, said blowing device comprises a rotating selector, capable of letting out said air flow in such a way to intercept said jet of chips, and moving means, capable of allowing the rotation of said rotating selector.

Always according to a preferred embodiment, said rotating selector may comprise a hollow first cylinder, having a longitudinal through eyelet, on its lateral surface, oriented towards the workpiece; and a hollow second cylinder, placed inside said first cylinder and free to rotate with respect to said first cylinder, through which compressed air can flow, and comprising a plurality of openings, placed along its external surface, capable of creating a fluidic connection between the inside of said second cylinder and the outside, such that, when said second cylinder rotates with respect to said first cylinder, a portion of said longitudinal eyelet is selected to let through said air flow passing through the opening placed by said longitudinal eyelet.

Still according to a preferred embodiment, said rotating selector may comprise a hollow second cylinder, having a longitudinal through eyelet, on its lateral surface, oriented towards the workpiece; and a hollow first cylinder, placed outside said second cylinder and free to rotate with respect to said second cylinder, comprising a plurality of openings, placed along its external surface, capable of creating a fluidic connection between the inside of said first cylinder and the outside, such that, when said first cylinder rotates with respect to said second cylinder, a portion of said longitudinal eyelet is selected to let through said air flow passing through the opening placed by said longitudinal eyelet.

Further according to a preferred embodiment, said machine may comprise an enclosure and said tool and said blowing device may be housed within said enclosure.

Advantageously according to a preferred embodiment, said enclosure may comprise suction means, capable of sucking said chips, and a suction duct, connected to said suction means, capable of directing said chips towards said suction means, and said blowing device may be capable of generating an air flow to direct said chips towards said suction duct.

Always according to a preferred embodiment, said machine may comprise an edge bander group placed before or after said tool.

### List of figures

The present invention will be now described, for illustrative but not limitative purposes, according to its preferred embodiments, with particular reference to the figures of the enclosed drawings, wherein:
figure 1 shows an axonometric view of the improved machine, object of the present invention, in a first embodiment;
figure 2 shows a second axonometric view of a detail of the improved machine shown in figure 1;
figure 3 shows an axonometric view of the improved machine, object of the present invention, in a second embodiment;
figure 4 shows a second axonometric view of a detail of the improved machine shown in figure 3; and
figure 5 shows a further axonometric view of the detail shown in figure 4.

In the various figures, the similar parts will be indicated with the same numerical references.

### Detailed description of the figures

Referring to the attached figures, a machine M for working workpieces made of wood, ceramic, plastic, metal, glass, fiberglass and the like according to the present invention can be seen.

In particular, said machine M mainly comprises a tool 1, advancing means (not shown in the figures), for advancing the workpiece P to be machined, a blowing device 2, and an enclosure 3.

The advancing means, as said, allow the advancement of the workpiece P to be machined according to an advancement direction W, parallel to an advancement axis X.

The tool 1 is arranged on a plane parallel to a perpendicular plane XY, identified, in its turn, by said advancement axis X and from an axis Y, the latter perpendicular to the surface of said workpiece P.

The blowing device 2 is arranged downstream of said tool 1, with respect to said advancement direction W.

The enclosure 3 encloses said tool 1 and said blowing device 2.

Said workpiece P to be machined can be, for example, a panel, as shown in the figures.

Said tool 1 is of the rotary type, such as for example a blade or a cutter, and is able to rotate around an axis parallel to a horizontal axis Z, perpendicular to said perpendicular plane XY.

The tool 1 is also able to translate along an axis parallel to said axis Y, and along an axis parallel to said horizontal axis Z.

Said tool 1 can rotate around an axis parallel to said advancement axis X, so as to tilt with respect to said workpiece P.

Said tool 1 is able to perform machining, such as grooves or incisions, on the surface of said workpiece P. In particular, in the case at issue, said tool 1 is capable of rotating around said horizontal axis Z in favor of the advancement of said piece P, i.e. in such a way that its peripheral speed in proximity to said workpiece P is integral with said advancement direction W.

During the execution of the machining operations on said workpiece P, said tool 1 generates a chip jet having an expulsion speed, which is concordant with said advancement direction W.

The blowing device 2 generates an airflow to reduce the expulsion speed of said chip jet. In particular, said blowing device 2 is arranged inside said enclosure 3 at the maximum distance allowed by said tool 1. The air flow of the blowing device 2 allows a drastic reduction in the expulsion speed of the chips, so as to cause them to fall in the enclosure 3.

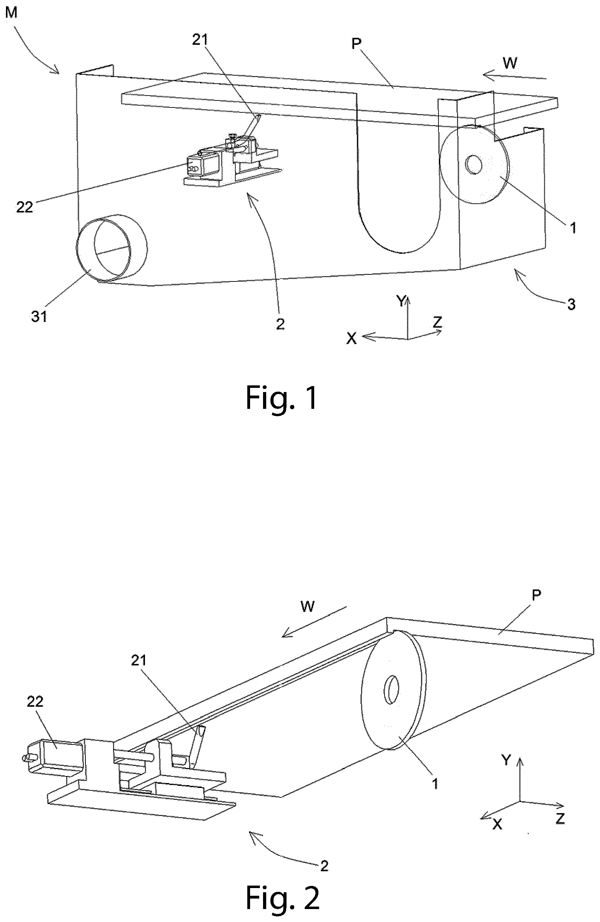

Referring in particular to the first embodiment shown in figures 1-2, said blowing device 2 comprises at least one nozzle 21, capable of directing said airflow.

Said blowing device 2 also comprises moving means 22, capable of moving said nozzle 21 along an axis parallel to said horizontal axis Z, to better intercept the chip jet.

Said enclosure 3 comprises suction means, not shown in the figure, capable of sucking the chip, and a suction duct 31, connected to said suction means, capable of conveying the chip generated by the machining of said piece P towards said suction means.

The operation of the machine M described above is as follows.

When it is intended to perform a machining on said workpiece P made of wood, ceramic, plastic, metal, glass, fiberglass, and the like, such as for example a groove or an incision, said workpiece P is positioned upstream of said tool 1 with respect to said advancement direction W, so that the surface to be machined is parallel to a horizontal plane XZ, identified by said advancement axis and said horizontal Z axis.

Said workpiece P is then moved by said advancement means, along the advancement axis X in said advancement direction W.

The tool 1 translates along an axis parallel to the Y axis and along an axis parallel to the horizontal Z axis, so as to reach the appropriate height to carry out the desired machining.

Said tool 1 therefore rotates in favor of the advancement of said workpiece P.

Said moving means 22 moves said nozzle 21 along an axis parallel to said horizontal axis Z, so as to align it with said tool 1 with respect to said advancement X axis.

Said nozzle 21 directs said air flow generated by said blowing device 2 towards said groove or incision on said workpiece P.

When said piece P, advancing according to said advancement direction W, reaches said tool 1, said tool 1 performs the predetermined machining on said workpiece P, while said workpiece P continues to advance along said advancement direction W.

During machining, said tool 1 generates a jet of chips at high speed along said direction of advance W.

Said jet of chip advances until it reaches said blowing device 2.

The airflow generated by said nozzle 21 decreases the speed of said chip jet, which falls into the enclosure 3, and it is sucked through said suction duct 31, which conveys it towards said suction means.

Said workpiece P then continues to advance along said advancement direction until it exits from said machine M.

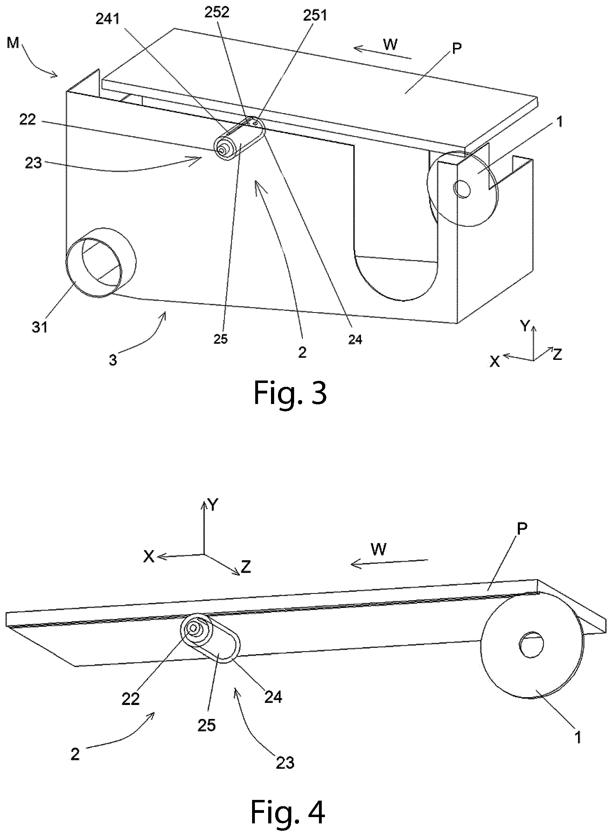

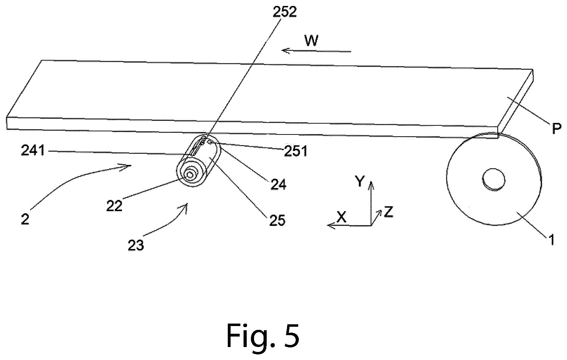

Referring now to figures 3-5, it is possible to observe a machine for machining pieces M, equipped with a second embodiment of said blowing device 2.

In this case, the blowing device 2 comprises a rotating selector 23, as better described below, which is able to rotate to direct said airflow.

More specifically, the rotating selector 23 of the blowing device 2 comprises a first cylinder 24 and a second cylinder 25.

The moving means 22 of the blowing device 2 are capable of allowing the rotation of said rotating selector 23.

Said first cylinder 24 is arranged along a direction parallel to said horizontal axis Z.

Furthermore, said first cylinder 24 is hollow and has a longitudinal slot 241, on the lateral surface, directed towards the workpiece P, and in particular towards said groove or incision. In particular, in the present embodiment, the longitudinal slot 241 is parallel to said horizontal axis Z and oriented upwards, i.e. towards the workpiece P.

In other embodiments, said first cylinder 24 can be arranged along different axes, also inclined with respect to the workpiece (i.e., with respect to said Z axis).

Said longitudinal slot 241 passes through, thus putting the interior of said first hollow cylinder 24 in communication with the exterior.

Said second cylinder 25 is arranged inside said first cylinder 24 and rotatably mounted with respect to it. In particular, the external surface of said second cylinder 25 is in contact with the internal surface of said first cylinder 24.

Said second cylinder 25 is also hollow and has a plurality of openings 251, 252 (in the figure only two are shown), arranged along a spiral on its external surface of said second cylinder 25. Said openings 251, 252 put the interior of said second cylinder 25 in fluid-dynamic communication with the exterior.

Said second cylinder 25 is capable of containing compressed air inside and to make it exit through said openings 251, 252.

Each opening 251, 252 is capable of aligning itself with said longitudinal slot 241 of said first cylinder 24 at a specific angle of rotation of said second cylinder 25. This allows selecting the portion of said longitudinal slot 241 from which making said flow airflow to come out.

The operation of said machine M equipped with said blowing device 2 according to the second embodiment is in general terms similar to that of machine M shown in figures 1 and 2. However, when it is necessary to move the direction of the airflow, said rotating selector 23 is moved by said moving means 22, to align said airflow with said tool 1 with respect to said advancement axis X.

In particular, said second cylinder 25 rotates inside said first cylinder 24, so to align the appropriate opening of said plurality of openings with said longitudinal slot 241 of said first cylinder 24.

Said air flow then exits from said second cylinder 25, through the opening aligned with said longitudinal slot 241.

In a further form of embodiment of the blowing device 2, not shown in the figures, said first cylinder 24 is hollow and has a plurality of openings, arranged along a spiral on its external surface, which put the interior of said second cylinder 24 in fluid-dynamic communication with the exterior.

Said second cylinder 25 is arranged inside said first cylinder 24.

In particular, the external surface of said second cylinder 25 is in contact with the internal surface of said first cylinder 24 and said first cylinder 24 is rotatably mounted with respect to said second cylinder 25.

Said second cylinder 25 is also hollow and has a longitudinal slot, on the lateral surface, directed towards the workpiece P, and in particular towards said groove or incision.

Said second cylinder 25 is capable of containing compressed air inside and making it come out through said longitudinal slot.

Said longitudinal slot is parallel to said horizontal axis Z, and oriented upwards, or, in the embodiment at issue, towards the workpiece P.

Said longitudinal slot is passing through, thus putting the interior of said second cylinder 25 into fluid-dynamic communication with the outside.

Each opening of said first cylinder 24 is capable of aligning itself with said longitudinal slot of said second cylinder 25 at a specific angle of rotation of said first cylinder 24.

The operation of said blowing device 2 according to the third embodiment is completely similar to that of the blower according to the second embodiment, except that said second cylinder 25 does not rotate with respect to said workpiece P, while said first cylinder 24 rotates with respect to said second cylinder 25, to select the opening of said first cylinder 24 and the corresponding portion of said longitudinal slot of said second cylinder 25, from which to let said air flow out.

Said machine M according to the invention can be an edge banding machine for wooden panels, used for finishing the surface machining of such panels by applying a decorative edge. The decorative edges are usually plastic, wooden or metal edging tapes, supplied in the form of reels.

This edge-banding machine, in addition to the machining unit described above, which realizes the groove, comprises, downstream or upstream of said tool U, an edge banding station arranged in correspondence with one side of the support surface of the workpiece P, equipped with advancement means, along the advancement axis X in said advancement direction W.

The edge-banding station comprises, in turn, a coating unit, for applying the glue on said lateral surface to be coated while said workpiece P, such as for example a panel, slides, a reel of edge-banding tape and a pressure unit comprising pressure rollers, arranged downstream of the spreading unit, to make the edge-banding tape adhere to said glued side surface.

Such edge-banding machines of the prior art also comprise cutters, arranged downstream of the beading station, for cutting and rounding the excesses of the previously applied edge-banding tape.

### Advantages

A clear advantage of the present invention is the possibility of having a machine for machining workpieces made of wood, ceramic, plastic, metal, glass, fiberglass, and the like, which allows containing and sucking the chip resulting from machining in an optimal way.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for machining workpieces (P) made of wood, ceramic, plastic, metal, glass, fiberglass, and the like, comprising
at least one tool (1), capable of performing machining on the surface of said workpiece (P), in such a way to create a jet of chips essentially oriented along an expulsion direction having an expulsion speed,
wherein said machine (M) is a pass-through type machine (M) and
wherein it comprises a blowing device (2) comprising
at least one nozzle (21) capable of generating an air flow, said blowing device (2) being placed after said tool (1) with respect to said expulsion direction, capable of generating an air flow to reduce the expulsion speed of said jet of chips,
said machine (M) being **characterised in that** said blowing device (2) further comprises moving means (22) capable of moving said at least one nozzle (21) along an axis parallel to a horizontal axis (Z), which is substantially perpendicular to the advancement direction (W) of said workpieces (P), so as to align said at least one nozzle (21) with said tool (1) with respect to an advancement axis (X) parallel to the advancement direction (W).

2. Machine (M) according to the previous claim, **characterized**
**in that** it comprises advancing means, to allow the advancement of said workpieces (P) to be machined along said advancement direction (W), and
**in that** said advancement direction (W) is concordant with said expulsion direction.

3. Machine (M) according to any one of the previous claims, **characterized in that** said tool is a blade (1).

4. Machine (M) according to any one of claims 2 or 3, **characterized in that** said tool (1) is capable of rotating with said advancement direction (W) of said workpiece (P) around an axis parallel to said horizontal axis (Z), perpendicular to a perpendicular plane (XY) formed by the advancement axis (X) and an axis (Y) substantially perpendicular to the surface of said workpiece (P), and it is capable of translating along an axis parallel to said axis (Y) and along an axis parallel to said horizontal axis (Z).

5. Machine (M) according to any one of claims 1 - 4, **characterized in that** said blowing device (2) comprises
a rotating selector (23), capable of letting out said air flow in such a way to intercept said jet of chips, and
moving means (22), capable of allowing the rotation of said rotating selector (23).

6. Machine (M) according to the previous claim, **characterized in that** said rotating selector (23) comprises
a hollow first cylinder (24), having a longitudinal through eyelet (241), on its lateral surface, oriented towards the workpiece (P); and
a hollow second cylinder (25), placed inside said first cylinder (24) and free to rotate with respect to said first cylinder (24), through which compressed air can flow, and comprising a plurality of openings (251, 252), placed along its external surface, capable of creating a fluidic connection between the inside of said second cylinder (25) and the outside, such that, when said second cylinder (25) rotates with respect to said first cylinder (24), a portion of said longitudinal eyelet (241) is selected to let through said air flow passing through the opening (251, 252) placed by said longitudinal eyelet (241).

7. Machine (M) according to claim 5, **characterized in that** said rotating selector (23) comprises
a hollow second cylinder (25), having a longitudinal through eyelet, on its lateral surface, oriented towards the workpiece (P); and
a hollow first cylinder (24), placed outside said second cylinder (25) and free to rotate with respect to said second cylinder (25), comprising a plurality of openings, placed along its external surface, capable of creating a fluidic connection between the inside of said first cylinder (24) and the outside, such that, when said first cylinder (24) rotates with respect to said second cylinder (25), a portion of said longitudinal eyelet is selected to let through said air flow passing through the opening placed by said longitudinal eyelet.

8. Machine (M) according to any one of the previous claims, **characterized**
**in that** it comprises an enclosure (3) and
**in that** said tool (1) and said blowing device (2) are housed within said enclosure (3).

9. Machine (M) according to the previous claim, **characterized**
**in that** said enclosure (3) comprises
suction means, capable of sucking said chips, and
a suction duct (31), connected to said suction means, capable of directing said chips towards said suction means, and
**in that** said blowing device (2) is capable of generating an air flow to direct said chips towards said suction duct (31).

10. Machine (M) according to any one of the previous claims, **characterized in that** it comprises an edge bander group placed before or after said tool (1).

## Patentansprüche

1. Maschine (M) zur Bearbeitung von Werkstücken (P) aus Holz, Keramik, Kunststoff, Metall, Glas, Glasfaser und dergleichen, umfassend
mindestens ein Werkzeug (1), das in der Lage ist, die Oberfläche des Werkstücks (P) so zu bearbeiten, dass ein im Wesentlichen entlang einer Ausstoßrichtung ausgerichteter Strahl von Spänen mit einer Ausstoßgeschwindigkeit erzeugt wird,
wobei die Maschine (M) ist
eine Maschine vom Typ Durchlauferhitzer (M) und wobei
umfasst eine Blasvorrichtung (2) mit
mindestens eine Düse (21), die in der Lage ist, einen Luftstrom zu erzeugen, wobei die Blasvorrichtung (2) in Bezug auf die Ausstoßrichtung hinter dem Werkzeug (1) angeordnet ist und in der Lage ist, einen Luftstrom zu erzeugen, um die Ausstoßgeschwindigkeit des Spanstrahls zu verringern,
wobei die Maschine (M) **dadurch gekennzeichnet ist, dass** die Blasvorrichtung (2) außerdem umfasst Bewegungsmittel (22), die in der Lage sind, die mindestens eine Düse (21) entlang einer Achse parallel zu einer horizontalen Achse (Z) zu bewegen, die im Wesentlichen senkrecht zur Vorschubrichtung (W) der Werkstücke (P) ist, um die mindestens eine Düse (21) mit dem Werkzeug (1) in Bezug auf eine Vorschubachse (X) parallel zur Vorschubrichtung (W) auszurichten.

2. Maschine (M) nach dem vorherigen Anspruch, **gekennzeichnet**
**dadurch, dass** sie Vorschubmittel umfasst, um den Vorschub der zu bearbeitenden Werkstücke (P) entlang der Vorschubrichtung (W) zu ermöglichen, und
dadurch, dass die Vorschubrichtung (W) mit der Ausstoßrichtung übereinstimmt.

3. Maschine (M) nach einem der vorherigen Ansprüche, **dadurch gekennzeichnet, dass** das Werkzeug eine Klinge (1) ist.

4. Maschine (M) nach einem der Ansprüche 2 oder 3, **dadurch gekennzeichnet, dass** das Werkzeug (1) in der Lage ist, sich mit der Vorschubrichtung (W) des Werkstücks (P) um eine zur horizontalen Achse (Z) parallele Achse zu drehen, die senkrecht zu einer von der Vorschubachse (X) und einer im Wesentlichen senkrecht zur Oberfläche des Werkstücks (P) verlaufenden Achse (Y) gebildeten senkrechten Ebene (XY) steht, und dass es in der Lage ist, sich entlang einer zur Achse (Y) parallelen Achse und entlang einer zur horizontalen Achse (Z) parallelen Achse zu verschieben.

5. Maschine (M) nach einem der Ansprüche 1-4, **dadurch gekennzeichnet, dass** die Blasvorrichtung (2) umfasst einen rotierenden Selektor (23), der in der Lage ist, den Luftstrom so auszulassen, dass er den Spänestrahl abfängt, und
Bewegungsmittel (22), die die Drehung des drehbaren Wählers (23) ermöglichen.

6. Maschine (M) nach dem vorherigen Anspruch, **dadurch gekennzeichnet, dass** der Drehwähler (23) umfasst
einen hohlen ersten Zylinder (24), der an seiner Seitenfläche eine längs verlaufende durchgehende Öse (241) aufweist, die auf das Werkstück (P) ausgerichtet ist; und
einen hohlen zweiten Zylinder (25), der innerhalb des ersten Zylinders (24) angeordnet ist und sich in Bezug auf den ersten Zylinder (24) frei drehen kann, durch den Druckluft strömen kann, und der eine Vielzahl von Öffnungen (251, 252) aufweist, die entlang seiner Außenfläche angeordnet sind und eine Fluidverbindung zwischen dem Inneren des zweiten Zylinders (25) und der Außenseite herstellen können, so dass, wenn der zweite Zylinder (25) in Bezug auf den ersten Zylinder (24) rotiert, ein Teil der Längsöffnung (241) ausgewählt wird, um den Luftstrom durchzulassen, der durch die Öffnung (251, 252), die durch die Längsöffnung (241) platziert ist, hindurchgeht.

7. Maschine (M) nach Anspruch 5, **dadurch gekennzeichnet, dass** der Drehwähler (23) umfasst
einen hohlen zweiten Zylinder (25), der an seiner Seitenfläche eine längs verlaufende, zum Werkstück (P) hin gerichtete Durchgangsöffnung aufweist; und
einen hohlen ersten Zylinder (24), der außerhalb des zweiten Zylinders (25) angeordnet ist und sich in Bezug auf den zweiten Zylinder (25) frei drehen kann, mit einer Vielzahl von Öffnungen, die entlang seiner Außenfläche angeordnet sind und eine Fluidverbindung zwischen der Innenseite des ersten Zylinders (24) und der Außenseite herstellen können, so dass, wenn sich der erste Zylinder (24) in Bezug auf den zweiten Zylinder (25) dreht, ein Teil der Längsöffnung ausgewählt wird, um den Luftstrom durchzulassen, der durch die von der Längsöffnung angeordnete Öffnung hindurchgeht.

8. Maschine (M) gemäß einem der vorhergehenden Ansprüche, **dadurch gekennzeichnet**
**dass** sie ein Gehäuse (3) umfasst und
**dass** das Werkzeug (1) und die Blasvorrichtung (2) innerhalb des Gehäuses (3) untergebracht sind.

9. Maschine (M) nach dem vorherigen Anspruch, gekennzeichnet
dass das Gehäuse (3) umfasst
Saugmittel, die in der Lage sind, die Späne anzusaugen, und
eine Saugleitung (31), die mit den Saugmitteln verbunden ist und die Späne zu den Saugmitteln leiten kann, und
dass die Blasvorrichtung (2) in der Lage ist, einen Luftstrom zu erzeugen, um die Späne in Richtung des Saugkanals (31) zu lenken.

10. Maschine (M) nach einem der vorhergehenden Ansprüche, **dadurch gekennzeichnet, dass** sie eine vor oder nach dem Werkzeug (1) angeordnete Kantenanleimmaschine umfasst.

## Revendications

1. Machine (M) pour l'usinage de pièces (P) en bois, céramique, plastique, métal, verre, fibre de verre et similaires, comprenant
au moins un outil (1), capable d'effectuer un usinage sur la surface de ladite pièce (P), de manière à créer un jet de copeaux essentiellement orienté selon une direction d'expulsion ayant une vitesse d'expulsion, dans lequel ladite machine (M) est
une machine de type "pass=through" (M) et
dans lequel
comprend un dispositif de soufflage (2) comprenant
au moins une buse (21) capable de générer un flux d'air, ledit dispositif de soufflage (2) étant placé après ledit outil (1) par rapport à ladite direction d'expulsion, capable de générer un flux d'air pour réduire la vitesse d'expulsion dudit jet de copeaux, ladite machine (M) est **caractérisée en ce que** ledit dispositif de soufflage (2) comprend en outre
des moyens de déplacement (22) capables de déplacer ladite au moins une buse (21) le long d'un axe parallèle à un axe horizontal (Z), qui est sensiblement perpendiculaire à la direction d'avancement (W) desdites pièces (P), de manière à aligner ladite au moins une buse (21) avec ledit outil (1) par rapport à un axe d'avancement (X) parallèle à la direction d'avancement (W).

2. Machine (M) selon la revendication précédente, **caractérisée**
**en ce qu'**il comprend des moyens d'avancement, pour permettre l'avancement desdites pièces (P) à usiner le long de ladite direction d'avancement (W), et
en ce sens que ladite direction d'avancement (W) est concordante avec ladite direction d'expulsion.

3. Machine (M) selon l'une quelconque des revendications précédentes, **caractérisée en ce que** ledit outil est une lame (1).

4. Machine (M) selon l'une quelconque des revendications 2 ou 3, **caractérisée en ce que** ledit outil (1) est capable de tourner avec ladite direction d'avancement (W) de ladite pièce (P) autour d'un axe parallèle audit axe horizontal (Z), perpendiculaire à un plan perpendiculaire (XY) formé par l'axe d'avancement (X) et un axe (Y) sensiblement perpendiculaire à la surface de ladite pièce (P), et il est capable de se translater selon un axe parallèle audit axe (Y) et selon un axe parallèle audit axe horizontal (Z).

5. Machine (M) selon l'une quelconque des revendications 1-4, **caractérisée par le fait que** le dispositif de soufflage (2) comprend
un sélecteur rotatif (23), capable de libérer ledit flux d'air de manière à intercepter ledit jet de copeaux, et
des moyens de déplacement (22), capables de permettre la rotation dudit sélecteur rotatif (23).

6. Machine (M) selon la revendication précédente, **caractérisée en ce que** ledit sélecteur rotatif (23) comprend
un premier cylindre creux (24), comportant sur sa surface latérale un œillet longitudinal traversant (241), orienté vers la pièce à usiner (P); et
un second cylindre creux (25), placé à l'intérieur dudit premier cylindre (24) et libre de tourner par rapport audit premier cylindre (24), à travers lequel l'air comprimé peut circuler, et comprenant une pluralité d'ouvertures (251, 252), placées le long de sa surface externe, capables de créer une connexion fluidique entre l'intérieur dudit second cylindre (25) et l'extérieur, de telle sorte que, lorsque ledit second cylindre (25) tourne par rapport audit premier cylindre (24), une partie dudit œillet longitudinal (241) est sélectionnée pour laisser passer ledit flux d'air passant par l'ouverture (251, 252) placée par ledit œillet longitudinal (241).

7. Machine (M) selon la revendication 5, **caractérisée en ce que** ledit sélecteur rotatif (23) comprend
un second cylindre creux (25), comportant sur sa surface latérale un œillet longitudinal traversant, orienté vers la pièce à usiner (P); et
un premier cylindre creux (24), placé à l'extérieur dudit second cylindre (25) et libre de tourner par rapport audit second cylindre (25), comprenant une pluralité d'ouvertures, placées le long de sa surface externe, capables de créer une connexion fluidique entre l'intérieur dudit premier cylindre (24) et l'extérieur, de sorte que, lorsque ledit premier cylindre (24) tourne par rapport audit second cylindre (25), une partie dudit œillet longitudinal est sélectionnée pour laisser passer ledit flux d'air passant par l'ouverture placée par ledit œillet longitudinal.

8. Machine (M) selon l'une quelconque des revendications précédentes, **caractérisée par**
en ce qu'elle comprend une enceinte (3) et
en ce sens que ledit outil (1) et ledit dispositif de soufflage (2) sont logés dans ladite enceinte (3).

9. Machine (M) selon la revendication précédente, **caractérisée**
**en ce que** ladite enceinte (3) comprend
des moyens d'aspiration, capables d'aspirer lesdits copeaux, et
un conduit d'aspiration (31), relié audit moyen d'aspiration, capable de diriger lesdits copeaux vers ledit moyen d'aspiration, et
**en ce que** ledit dispositif de soufflage (2) est capable de générer un flux d'air pour diriger lesdits copeaux vers ledit conduit d'aspiration (31).

10. Machine (M) selon l'une quelconque des revendications précédentes, **caractérisée par le fait qu'**elle comprend un groupe de banderoles placé avant ou après ledit outil (1).
